Europäisches Patentamt

European Patent Office

Office européen des brevets

(19)

(11) **EP 1 174 828 A2**

(12) **EUROPEAN PATENT APPLICATION**

(43) Date of publication:
**23.01.2002  Bulletin 2002/04**

(51) Int Cl.[7]: **G06T 11/20**

(21) Application number: **01306196.5**

(22) Date of filing: **18.07.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.07.2000  GB 0017962**

(71) Applicant: **Pace Micro Technology PLC
Saltaire, Shipley, BD18 3LF (GB)**

(72) Inventor: **Avison, Ben
Saltaire, Shipley BD18 3LF (GB)**

(74) Representative: **Wood, Graham
Bailey Walsh & Co, 5 York Place
Leeds LS1 2SD (GB)**

(54) **Method for vector length calculation in data processing**

(57)    The invention relates to the processing and calculation of estimates of vector lengths using a subset of linear equations. The liner equations which are used are selected for the subset with respect to the particular application and specific processing requirements and can then be selected from the subset as required for particular calculations. In each case the linear equations do not to be used with reference to look up data tables thereby reducing the memory space required and also reducing the computational power required in processing systems.

**EP 1 174 828 A2**

**Description**

The invention which is the subject of this application is directed towards an improvement in the processing of data such as, but not exclusively, video data which is generated as part of a broadcast data system.

There is a need in the processing of data to be able to calculate vector lengths. Conventionally, to perform such a calculation directly, Pythagoras' theorem is used and requires two multiplications and a square root. However in the processing of data these calculations are computationally intensive operations. Furthermore, in many instances it is not necessary for a high level of accuracy to be obtained in the calculation of the vector lengths such that an estimation of the length can be satisfactory for requirements.

An alternative conventional technique is to construct a table of data which are referred to as look up tables and which can be referred to during the calculation for data which reduces the need for the full calculation to be performed. However the storage of the look up table data takes up memory space and it is important, for subsequent calculations to be correct, that the data in the tables is required to be accurate.

The aim of the present invention is to provide a method whereby the lengths of a vector can be estimated to an acceptable level of accuracy and consistency for practical use but to also achieve a reduction in the computational complexity which is required to be performed.

In a first aspect of the invention there is provided a method for the length of a vector to be estimated, characterised in that said method includes the generation of a series of linear equations which may be used in the calculation of vector length, analysis of the same and selection of those linear equations which can be solved using arithmetic and/or bitwise operations, to form a subset of linear equations, said vector length calculations subsequently made using one or more linear equations, each derived from the specified subset of linear equations.

The equations which are used in accordance with the invention do not require the utilisation of look-up or record table, unlike alternative techniques.

In one embodiment the subset of equations used can be chosen at the stage of the design of the system in accordance with the required balance between execution speed, code size and accuracy of the estimations which are to be obtained.

The application of this method as herein described can be widely applicable and has application in a wide range of computing applications. Without restricting the scope of the application in any way some examples of use of the method are with respect to 3-D graphics rendering, for example in z-buffering or shading algorithms. For example, the method can be used in Bezier curve rendering, which in turn is used for font rendering, among other things. The method may be useful in colour space, for example when selecting a closest match to a particular colour from a given palette, or when calculating an optimal palette for a bitmap image. The method may also provide applications in motion estimation processing of video data at the encoding of the same and subsequent decoding of the same.

Specific embodiments of the invention are now described with reference to the accompanying diagrams.

If one first considers in the calculation of a vector length the length of the projection of the line joining the origin $O$ to the point $P(x_0, y_0)$ onto the line with equation $y = \frac{b}{a} x$.

Then by using the definition of the scalar product of two vectors, it can be shown that:

$$d = \frac{ax_0 + by_0}{\sqrt{a^2 + b^2}}$$

In accordance with the invention, d is considered to be an approximation to the length of the line *OP*. Furthermore, a further level of approximation is used to calculate the distance

$$D = \frac{ax + by}{c}$$

where $c \approx \sqrt{a^2 + b^2}$.

In order to allow efficient calculation of $D$, it is specified that the only equations of interest are those where $a$ and $b$ are integer, and c is an integer power of 2. It is demonstrated below how it is possible to select suitable values of $a$, $b$ and $c$ to achieve a set of equations that can achieve a desired level of accuracy in any direction. However firstly, it is useful for visualisation reasons to consider graphically the locus of constant $D$.

For example, the locus of $D = 1$ is given by $ax + by = c$ :

In this case, it can be seen that $c < \sqrt{a^2 + b^2}$, so along the line $y = \frac{b}{a} x$, $D$ will always be an overestimate of the actual distance from the origin (it will in fact be a factor of

$$\frac{\sqrt{a^2 + b^2}}{c}$$

too large).

As reference is made to angles which are progressively further and further away from the line $y = \frac{b}{a} x$, D becomes more and more of an underestimate of the actual distance from the origin: this will become significant later when selecting the best estimate of a particular length from the results of a number of functions.

A preferred way to pick a selection of sets of $a$, $b$, $c$ coefficients is to choose the maximum error which the user is prepared to accept in each instant, $\varepsilon_{max}$, and cycle through all possible combinations of coefficients. For each combination, calculate the range of angles over which the resultant function produces acceptable results, and then fit together a selection of functions that, between them, cover the possible angles.

This is not necessarily a complex matter as, first of all, there is symmetry in the $x$ and $y$ axes, and in the line $y = x$. If these are redefined as $x = \max(|x|, |y|)$ and $y = \min(|x|, |y|)$, then only angles in the range 0° - 45° need be considered, along with consideration of positive $c$ and positive or zero $a$ and $b$. Also, it is known that $b \leq a$, as well as $a \leq c$ and $b \leq c$.

If

$$\left| \frac{\sqrt{a^2 + b^2}}{c} - 1 \right| > \varepsilon_{max},$$

then the function has an unacceptable error at its point of closest approach to the origin, and the combination of coefficients can be discarded. The error may be expressed as a function of $\phi$, the angle from the $x$-axis:

$$\varepsilon(\phi) = \frac{\sqrt{a^2 + b^2}}{c} \cos(\phi - \tan^{-1}\frac{b}{a}) - 1$$

So the limiting angles within which the function satisfies the specified tolerance are given by

$$\tan^{-1}\frac{b}{a} \pm \cos^{-1}\left(\frac{c(1 - \varepsilon_{max})}{\sqrt{a^2 + b^2}}\right)$$

($\varepsilon_{max}$ being negated because at the extreme angles, the distance is underestimated).

Once the set of functions is known, each of which is suitable for part of the range $0° \leq \phi \leq 45°$, the distance estimate of any point from the origin - the length of a vector. There is no need to calculate which of the functions is the best one to use for any given point; because each function always provides its greatest overestimates at points closest to the line $y = \frac{b}{a}x$, all that need be done is to evaluate all the functions, and pick the largest result.

It should also be noted that the method can be used in applications to higher dimensions than 2. In these cases, the direct analogue would be to consider a collection of lines with planes as foci; with the square of the number of functions to achieve the same accuracy in 3 dimensions, the cube of the number in 4 dimensions, and so on. Alternatively a set of 2-D equations twice (in 3-D) or more (in higher dimensions) could be used, using relations such as $\sqrt{u^2 + v^2 + w^2} = \sqrt{\sqrt{u^2 + v^2}^2 + w^2}$.

Some specific examples of the invention can now be provided although there are an infinite collection of linear equations or algorithms that may be envisaged. They may be roughly categorised according to order, where the order is defined as the maximum value of $\log_2(c)$ out of all the functions used in the algorithm. Listed below are the most accurate, or one of the jointly most accurate, algorithms for each of the orders from 0th to 5th. At the higher orders, there are diminishing returns, because the number of functions, and the binary complexity of the coefficients used, start increasing rapidly compared against the benefit in accuracy.

The following definitions are used in the expressions below:

$D$ = approximate distance from origin
$X$ = max($|x|,|y|$)
$Y$ = min($|x|,|y|$)

0th order

$D = X$
$\varepsilon_{max} = 0.30$

This is the simplest algorithm, and is included for completeness, although it may find its application limited. The only other 0th order algorithm is $D = X + Y$, but in that case $\varepsilon_{max}$ is a relatively large value of 0.41.

1st order

$$D = \frac{2X + Y}{2}$$

$$\varepsilon_{max} = 0.119$$

Example implementation could be with a microprocessor assembler:

```
; 1st order approximation to Pythagorean distance
; On entry:
;    r0,r1 are (integer) coordinates of start point
;    r2,r3 are (integer) coordinates of end point
; On exit:
;    r0 is distance between them
;    r1 is corrupted
;    r2,r3 are preserved
SUBS    r0,r0,r2        ; r0 = vector x
RSBMI   r0,r0,#0        ; r0 = |x|
SUBS    r1,r1,r3        ; r1 = vector y
RSBMI   r1,r1,#0        ; r1 = |y|
CMP     r0,r1         ; if r0< r1 then swap  values
EORLT   r0,r0,r1
EORLT   r1,r0,r1
EORLT   r0,r0,r1
ADD     r0,r1,r0,LSL#1  ; r0 = 2*max + min
MOV     r0,r0,LSR#1     ; divide through by 2
```

2nd order

$$D = \max(X, \frac{3X + 3Y}{4})$$

$$\varepsilon_{max} = 0.061$$

Example implementation :

```
; 2nd order approximation to Pythagorean distance
; On entry:
;   r0,r1 are (integer) coordinates of start point
;   r2,r3 are (integer) coordinates of end point
; On exit:
;   r0 is distance between them
;   r1 is corrupted
;   r2,r3 are preserved
SUBS    r0,r0,r2          ; r0 = vector x
RSBMI   r0,r0,#0          ; r0 = |x|
SUBS    r1,r1,r3          ; r1 = vector y
RSBMI   r1,r1,#0          ; r1 = |y|
CMP     r0,r1            ; if r0 < r1 then swap values
EORLT   r0,r0,r1
EORLT   r1,r0,r1
EORLT   r0,r0,r1
ADD     r1,r0,r1          ; r1 = max + min
ADD     r1,r1,r1,LSL#1   ; r1 = 3*max + 3*min
CMP     r1,r0,LSL#2      ;if (3*max+3*min)> 4*max then
MOVGT   r0,r1,LSR#2      ;result is r1/4 rather than r0
```

3rd order

$$D = \max(\frac{8X + Y}{8}, \frac{7X + 4Y}{8})$$

$$\varepsilon_{max} = 0.028$$

Example implementation :

```
; 3rd order approximation to Pythagorean distance
; On entry:
;    r0,r1 are (integer) coordinates of start point
;    r2,r3 are (integer) coordinates of end point
; On exit:
;    r0 is distance between them
;    r1,r2 are corrupted
;    r3 is preserved
SUBS    r0,r0,r2        ; r0 = vector x
RSBMI   r0,r0,#0        ; r0 = |x|
SUBS    r1,r1,r3        ; r1 = vector y
RSBMI   r1,r1,#0        ; r1 = |y|
SUBS    r2,r0,r1      ; if r0 < r1 then swap values
MOVLT   r0,r1
ADDLT   r1,r2,r1
RSB     r2,r0,r0,LSL#3  ; r2 = 7*max
ADD     r2,r2,r1,LSL#2  ; r2 = 7*max + 4*min
ADD     r1,r1,r0,LSL#3  ; r1 = 8*max + min
CMP     r1,r2
MOVGT   r0,r1,LSR#3     ; result is r1/8
MOVLE   r0,r2,LSR#3    ;or r2/8,whichever is greater
```

4th order

$$D = \max(X, \frac{15X + 6Y}{16}, \frac{12X + 11Y}{16})$$

$$\varepsilon_{max} = 0.0175$$

Example implementation :

```
; 4th order approximation to Pythagorean distance
; On entry:
; r0,r1 are (integer) coordinates of start point
; r2,r3 are (integer) coordinates of end point
; On exit:
; r0 is distance between them
; r1,r2,r3 are corrupted
SUBS     r0,r0,r2          ; r0 = vector x
RSBMI    r0,r0,#0          ; r0 = |x|
SUBS     r1,r1,r3          ; r1 = vector y
RSBMI    r1,r1,#0          ; r1 = |y|
SUBS     r2,r0,r1       ; if r0 < r1 then swap values
MOVLT    r0,r1
ADDLT    r1,r2,r1
MOV      r2,r0,LSL#3       ; r2 = 8*max
ADD      r2,r2,r0,LSL#2   ; r2 = 12*max
ADD      r3,r1,r1,LSL#1   ; r3 = 3*min
ADD      r2,r2,r3          ; r2 = 12*max + 3*min
ADD      r2,r2,r1,LSL#3   ; r2 = 12*max + 11*min
RSB      r1,r0,r0,LSL#4   ; r1 = 15*max
ADD      r1,r1,r3,LSL#1   ; r1 = 15*max + 6*min
CMP      r2,r1
MOVGT    r1,r2             ; r1 = max(r1,r2)
CMP      r1,r0,LSL#4       ; r1 = max(r1,16*r0)
MOVGT    r0,r1,LSR#4    ;return r1/16,if it was >r0*16
```

5th order

$$D = \max(\frac{16X + Y}{16}, \frac{31X + 8Y}{32}, \frac{29X + 14Y}{32}, \frac{25X + 20Y}{32})$$

$$\varepsilon_{max} = 0.0064$$

Example implementation:

```
; 5th order approximation to Pythagorean distance
; On entry:
; r0,r1 are (integer) coordinates of start point
; r2,r3 are (integer) coordinates of end point
; On exit:
; r0 is distance between them
; r1,r2,r3,r14 are corrupted
SUBS     r0,r0,r2         ; r0 = vector x
RSBMI    r0,r0,#0         ; r0 = |x|
SUBS     r1,r1,r3         ; r1 = vector y
RSBMI    r1,r1,#0         ; r1 = |y|
SUBS     r2,r0,r1       ; if r0 < r1 then swap values
MOVLT    r0,r1
ADDLT    r1,r2,r1
RSB      r14,r0,r0,LSL#5 ; r14 = 31*max
SUB      r2,r14,r0,LSL#1 ; r2 = 29*max
SUB      r3,r2,r0,LSL#2  ; r3 = 25*max
ADD      r3,r3,r1,LSL#4  ; r3 = 25*max + 16*min
ADD      r3,r3,r1,LSL#2  ; r3 = 25*max + 20*min
ADD      r2,r2,r1,LSL#4  ; r2 = 29*max + 16*min
SUB      r2,r2,r1,LSL#1  ; r2 = 29*max + 14*min
ADD      r14,r14,r1,LSL#3; r14 = 31*max + 8*min
MOV      r1,r1,LSL#1      ; r1 = 2*min
ADD      r0,r1,r0,LSL#5   ; r0 = 32*max + 2*min
CMP      r14,r0
MOVGT    r0,r14
CMP      r2,r0
MOVGT    r0,r2
CMP      r3,r0
MOVGT    r0,r3            ;r0 is now max(r0,r14,r2,r3)
MOV      r0,r0,LSR#5      ; divide by 32
```

Thus the major benefit of this method is in the quick execution time required. The code required is also compact particularly because there is no requirement for reference tables to be stored. The granularity of the vector lengths calculated is as fine as that of the vector components by contrast with a look up table oriented linear equation which is limited by the number of entries provided in the table.

The method allows the calculation of the vector length to be calculated approximately using a combination of one or more of the linear equations in the subset of linear equations which are particularly suited to fast efficient solution using microprocessors or in dedicated silicon integrated circuits. The equations can be solved using relatively simple arithmetic and bitwise operations and do not require the use of look up tables.

**Claims**

1.  A method for the length of a vector to be estimated, **characterised in that** said method includes the generation of a series of linear equations which may be used in the calculation of vector length, analysis of the same and selection of those linear equations which can be solved using arithmetic and/or bitwise operations, to form a subset of linear equations, said vector length calculations subsequently made using one or more linear equations, each derived from the specified subset of linear equations.

2.  A method according to claim 1 **characterised in that** each of the equations in the subset of linear equations do not require the utilisation of look-up or record tables.

3.  A method according to claim 1 **characterised in that** the equations included in the subset of equations are selected at the stage of the design of the method with reference to any or any combination of execution speed, code size and accuracy of the calculation result.

4.  A method according to claim 1 **characterised in that** the method is used in the development of 3-D graphics rendering in relation to z-buffering or shading algorithms.

5.  A method according to claim 4 **characterised in that** the method is used in Bezier curve rendering, which in turn is used for font rendering on a display screen.

6.  A method according to claim 1 **characterised in that** the method is used in relation to colour space selection when selecting a closest match to a particular colour from a given colour palette.

7.  A method according to claim 1 **characterised in that** the method is used in the motion estimation processing of video data at the encoding of the same and subsequent decoding of the same as part of a broadcast data system.

8.  A method according to claim 1 **characterised in that** the linear equations in a subset are categorised according to order, where the order is defined as the maximum value of $\log_2(c)$ out of all the functions used in the equation.

9.  A method according to claim 1 **characterised in that** the same can be used in the application for calculations of 2 or more dimensions.